# EUROPÄISCHE PATENTSCHRIFT

(11) **EP 1 387 760 B1**
(45) Veröffentlichungstag und Bekanntmachung des Hinweises auf die Patenterteilung: **09.11.2005**
(21) Anmeldenummer: 02732698.2
(22) Anmeldetag: 03.05.2002
(51) Int. Cl.: B29C 70/46, B29C 70/08, B29C 43/36

(54) **VERFAHREN UND VORRICHTUNG ZUM HERSTELLEN EINES FASERVERSTÄRKTEN KUNSTSTOFFTEILS**
METHOD AND DEVICE FOR PRODUCING A FIBER-REINFORCED PLASTIC PART
PROCEDE ET DISPOSITIF POUR PRODUIRE UNE PIECE EN MATIERE PLASTIQUE RENFORCEE PAR DES FIBRES

(30) Priorität: 17.05.2001 DE 10124122
(43) Veröffentlichungstag der Anmeldung: 11.02.2004
(73) Patentinhaber: Gerg Products GmbH, 83104 Hohenthann (DE)
(72) Erfinder: GERG, Blasius, 85625 Glonn-Haslach (DE); MUES, Andreas, 83052 Bruckmühl (DE)
(74) Vertreter: Ganahl, Bernhard
(86) Internationale Anmeldenummer: PCT/EP2002/004887
(87) Internationale Veröffentlichungsnummer: WO 2002/092331

(56) Entgegenhaltungen:
- WO-A-99/52703
- WO-A1-96/36477
- FR-A- 2 480 667
- US-A- 5 506 029
- PATENT ABSTRACTS OF JAPAN vol. 1998, no. 05, 30. April 1998 (1998-04-30) & JP 10 024461 A (MITSUBISHI MATERIALS CORP), 27. Januar 1998 (1998-01-27)

## Beschreibung

Die Erfindung betrifft ein Verfahren zum Herstellen eines faserverstärkten Kunststoffteils.

Bekannte faserverstärkte Kunststoffteile bzw. Verbundwerkstoffe bestehen in der Regel aus in Kunstharz eingebetteten Fasermatten. Diese Kunstharze sind Kunststoffe, die während des Herstellungsprozesses dünnflüssig sind, so dass die Fasermatten bei der Herstellung darin getränkt werden und die aufgrund chemischer Reaktionen aushärten.

Das Aushärten der Kunstharze dauert eine beträchtliche Zeit, die zum Beispiel 20 min betragen kann. Beim Herstellen derartiger Kunststoffteile ist es deshalb nicht möglich, die Zykluszeit, die benötigt wird, um in einem Formwerkzeug ein derartiges Kunststoffteil herzustellen, auf zum Beispiel weniger als 20 min zu vermindern. Diese Kunststoffteile sind deshalb in der Regel teure Spezialteile und aufgrund der hohen Zykluszeit für kostengünstige Massenartikel nicht geeignet.

Kostengünstige aus Kunststoff bestehende Massenartikel werden üblicherweise aus thermoplastischen Kunststoffen im Spritzgießverfahren hergestellt. Hierbei wird der Kunststoff etwas oberhalb seiner Erweichungstemperatur erwärmt und dann in eine Spritzgießform eingespritzt. In der Spritzgießform erstarrt der Kunststoff in der Regel in weniger als einer Minute und kann dann der Form entnommen werden. Hierdurch werden Zykluszeiten von weniger als 1 min realisiert, die eine entsprechend kostengünstige Herstellung der Kunststoffteile erlauben.

Mit dem bekannten Spritzgießverfahren ist es jedoch nicht möglich, faserverstärkte Kunststoffteile aus thermoplastischem Kunststoff herzustellen. Versuche der Erfinder haben gezeigt, dass beim Einlegen einer Fasermatte in eine Spritzgießform und dem Einspritzen von thermoplastischem Kunststoff folgende Probleme auftreten:
- Der thermoplastische Kunststoff erhärtet an der Oberfläche der Fasermatten und kann deshalb kaum in die Fasermatten eindringen. Es ist deshalb nicht möglich, dass der thermoplastische Kunststoff mehrere Fasermatten durchdringt und die einzelnen Fasern umschließt.
- Beim Einspritzen des thermoplastischen Kunststoffs in die Spritzgießform werden die Fasermatten von der Kunststoffmasse verschoben und beschädigt, so dass keine reproduzierbare Anordnung der Fasermatten im Kunststoffteil möglich ist.

Von der Firma Bond-Laminates (Homepage: www.bond-laminates.de) ist ein thermoplastischer Verbundwerkstoff bekannt, der unter dem Handelsnamen TEPEX® vertrieben wird. Dieses Verbundmaterial sind sogenannte Kunststoffbleche. Diese Kunststoffbleche werden aus Fasermatten und thermoplastischen Kunststofffolien hergestellt, die übereinandergeschichtet, erhitzt und mittels Walzen in einem kontinuierlichen Laminierprozess zu den Kunststoffblechen verpresst werden. Diese Kunststoffbleche werden nachträglich mit Formwerkzeugen in die gewünschte Form verformt, wobei hinterschnittene Profile kaum möglich sind. Da der Herstellungsprozess der Kunststoffbleche und die Formgebung zwei separate Prozesse sind, sind die hieraus ausgebildeten Kunststoffteile, im Vergleich zu mit dem Spritzgießverfahren hergestellten Kunststoffteilen teuer. Zudem besitzen sie nur eine sehr beschränkte Formgebung, da dass Ausgangsprodukt für das Formgebungsverfahren ein ebenflächiges Kunststoffblech ist.

Ferner ist früher ein sogenanntes Spritz-Gieß-Verfahren, das auch als Spritz-Präge-Verfahren bezeichnet wird, zum Verarbeiten thermoplastischer Kunststoffe verwendet worden. Bei diesem Verfahren wurde der thermoplastische Kunststoff in eine leicht geöffnete Form eingespritzt, die nach dem Einspritzen geschlossen wird, wodurch der sich darin befindliche Kunststoff in alle Kavitäten der Form gepresst wird. Dieses Verfahren ist für die Verwendung von thermoplastischen Kunststoffen mit schlechten Fließfähigkeiten zweckmäßig, da hiermit sichergestellt ist, dass die Form vollständig mit Kunststoff gefüllt ist. Bei den heute üblichen thermoplastischen Kunststoffen mit guten Fließfähigkeiten ist dieses Verfahren nicht mehr üblich.

Aus der DE-OS 2 011 954 geht ein Verfahren zum Erzeugen hinterspritzter Kunststoffteile hervor. Bei diesem Verfahren wird ein Schichtkörper rückseitig hinterspritzt, wobei ein Schichtkörper verwendet wird, der zumindest eine Schicht aus saugfähigem porösem Werkstoff aufweist, so dass durch Aufsaugen erwärmter Kunststoffmasse der Schichtkörper sich mit dem Spritzkunststoff verbindet.

Aus der US 4,891,176 geht ein Verfahren zum Ausbilden einer Formplatte hervor, die aus zwei vorgeformten Matten aus Glasfasern, einer Polyethylen-Folie und einem Polyurethan-Kern besteht. Durch die Polyethylen-Folie sollen Schrumpflinien in der Außenoberfläche der Formplatte vermieden werden. Diese vier Teile der Formplatte werden miteinander verpresst, wobei gleichzeitig ein Harz eingespritzt wird, das die Fasermatten imprägniert.

Die US 5,690,880 beschreibt ein Verfahren zum Herstellen eines Kunststoffteiles mit einer abriebfesten Oberfläche und einer räumlichen Kontur. Dieses Formteil wird durch Einlegen einer Folie in eine Formkammer, Einspritzen einer Kunststoffmasse und Formen und Verbinden der Folie und der Kunststoffmasse mittels eines Stempels erzeugt.

Aus der DE-OS 1 529 892 geht ein Verfahren zum Anspritzen von Schuhsohlen aus Kunststoff hervor, wobei zunächst eine der Sohle entsprechend dosierte Materialmenge in einen Formhohlraum, der größer als die fertige Schuhsohle ist, eingespritzt wird und erst nach beendeter Einspritzung der Formhohlraum zur Verfestigung und Ausformung des Materials zur Sohle und eine gleichzeitige Verbindung mit dem Schuhschaft auf die Größe der fertigen Sohle reduziert wird.

Aus der FR 2 480 667 A geht eine Presse zum Herstellen eines flachen Kunststoffteils hervor. Hierzu wird eine Platte aus faserverstärktem Kunststoffmaterial in die Presse eingeführt. Ein Stempel der Presse wird gegen eine Matrize der Presse bewegt und danach wird die verdichtete Kunststoffplatte aus der Presse entfernt. Der Stempel ist zweiteilig ausgebildet, wobei ein Stempelkern vorgesehen ist, der innerhalb eines Stempelmantels beweglich angeordnet ist.

In der US 5,506,029 ist eine Vorrichtung und ein Verfahren zum Herstellen faserverstärkter Kunststoffteile beschrieben, wobei ein faserverstärkter thermoplastischer Kunststoffbogen zunächst erwärmt wird, auf ein unteres Formteil aufgelegt wird, das obere und das untere Formteil derart zusammen bewegt werden, dass ein Hohlraum gebildet wird, dessen lichte Höhe etwas größer als die Dicke des faserverstärkten Bogens im nicht erwärmten Zustand ist. Da sich der faserverstärkte Bogen beim Erwärmen ausdehnt, wird er beim Zusammenfahren des oberen und unteren Formteils etwas zusammengepresst. Die Formteile besitzen Aussparungen, in welche thermoplastisches Harz zugeführt werden kann, das sich mit dem faserverstärkten Bogen verbindet. Hierdurch wird ein faserverstärktes Bauteil ausgebildet, das ein flächiges Element aufweist, an dem Rippen u.dgl. angeformt sind.

Aus der WO 96/36477 gehen Verfahren und Vorrichtungen zum Erzeugen faserverstärkter Kunststoffteile hervor. Hierbei sollen unterschiedlichste bekannte Verfahren kombiniert werden. Unter anderem soll hierzu auch der an sich bekannte Coining-Prozess verwendet werden, bei dem eine halbgeöffnete Form zum Verdichten des Kunststoffteils geschlossen wird.

Der Erfindung liegt die Aufgabe zugrunde, ein Verfahren zum Herstellen eines faserverstärkten Kunststoffteils zu schaffen, das für eine kostengünstige Massenproduktion geeignet ist.

Die Aufgabe wird durch ein Verfahren mit den Merkmalen des Anspruchs 1 gelöst.

Das erfindungsgemäße Verfahren zum Herstellen eines faserverstärkten Kunststoffteils umfasst folgende Schritte:
- Anordnen einer Verbundplatte, die aus Fasermatten und Lagen aus thermoplastischen Kunststoff ausgebildet ist, in einer Spritzgießform, wobei die Verbundplatte über die Erweichungstemperatur des thermoplastischen Kunststoffes erwärmt ist,
- Füllen der Spritzgießform mit über die Erweichungstemperatur erwärmten thermoplastischen Kunststoff,
- Verringern des Volumens der Spritzgießform zum Verdichten des eingefüllten thermoplastischen Kunststoffes, so dass der eingefüllte thermoplastische Kunststoff zu einer Konturkulisse geprägt wird und sich mit der Verbundplatte verbindet, und
- Entformen des Kunststoffteils.

Mit dem erfindungsgemäßen Verfahren wird an einer Verbundplatte eine Konturkulisse aus thermoplastischen Kunststoff ausgebildet, wobei durch das Verringern des Volumens der Spritzgießform zum Prägen der Konturkulisse und Verbinden der Konturkulisse mit der Verbundplatte möglich ist, dass die Spritzgießform mit geringem Druck gefüllt werden kann und der beim Prägevorgang erzeugte Druck gleichmäßig in der gesamten Kunststoffmasse aufgebaut wird, wodurch eine Beschädigung oder ein Verschieben der Verbundplatte sicher vermieden wird.

Das erfindungsgemäße Verfahren erlaubt somit die Verwendung von thermoplastischen Kunststoffen zur Herstellung eines faserverstärkten Kunststoffteils, das eine komplizierte Form besitzen kann und in einer Spritzgießform mit kurzer Zykluszeit herstellbar ist.

Mit dem erfindungsgemäßen Verfahren wird ein faserverstärktes Kunststoffteil erhalten, das eine hohe Festigkeit bei geringem Gewicht besitzt und durch das Vorsehen der Konturkulisse mit einer komplexen Raumform ausgebildet sein kann. Da sowohl der Kunststoff der Verbundplatte als auch der Kunststoff der Konturkulisse thermoplastische Kunststoffe sind, kann das erfindungsgemäße faserverstärkte Kunststoffteil mit einer sehr kurzen Zykluszeit hergestellt werden.

Nach einem bevorzugten Verfahren werden zunächst Fasermatten und Kunststofffolien zu einer Verbundplatte gepresst. An die gepresste Verbundplatte wird im erwärmten Zustand die Konturkulisse aus thermoplastischem Kunststoff mittels Spritzgießen angeformt.

Vorzugsweise wird das Verfahren in einer einzigen Spritzgießform ausgeführt, so dass sichergestellt ist, dass zwischen dem Pressen der Fasermatten und Kunststofffolien zu einer Verbundplatte und dem Spritzgießen der Konturkulisse das hierbei entstehende Kunststoffteil nicht mit Luft in Kontakt kommt und das gewünschte Temperaturniveau exakt gesteuert werden kann.

Zum Ausführen des erfindungsgemäßen Verfahrens kann eine Vorrichtung zum Herstellen eines faserverstärkten Kunststoffteils eine Spritzgießform verwendet werden, die durch eine Matrize und einem Stempel begrenzt ist, und der Stempel zweiteilig aus einem Stempelkern und einem Stempelmantel ausgebildet ist, wobei der Stempelkern an einer zur Matrize weisenden Fläche eine die Spritzgießform begrenzende Formfläche aufweist und angrenzend an dieser Formfläche ist der Stempelkern vom Stempelmantel umschlossen, und der Stempelmantel relativ zum Stempelkern beweglich ist, und
der Stempel und die Matrize in einer Pressvorrichtung derart angeordnet sind, dass der Stempel und die Matrize mit ihren die Spritzgießform begrenzenden Flächen aufeinander zu bewegbar sind.

Durch das zweiteilige Ausbilden des Stempels ist es möglich, dass die Matrize und der Stempel in einem ersten Verfahrensabschnitt gegeneinander gepresst werden, wobei die zur Matrize weisenden Flächen des Stempelkerns und des Stempelmantels zueinander fluchten, und danach der Stempelkern im Stempelmantel ein Stück zurückgezogen wird, so dass der Raum zwischen dem Stempelkern und der Matrize erweitert wird. In diesem erweiterten Raumbereich wird Kunststoff zum Ausbilden der Konturkulisse eingespritzt.

Mit dieser Vorrichtung ist es möglich, in der durch die Matrize und dem Stempel begrenzten Spritzgießform sowohl eine Verbundplatte zu pressen als auch eine an der Verbundplatte angeformte Konturkulisse mittels Spritzgießen herzustellen. Während des gesamten Verfahrens kann die Spritzgießform geschlossen gehalten werden, so dass sichergestellt ist, dass der darin befindliche Kunststoff nicht mit Luft in Kontakt tritt und zudem ist es möglich, den Temperaturverlauf innerhalb der Spritzgießform exakt zu steuern, so dass das faserverstärkte Kunststoffteil mit hoher Qualität herstellbar ist.

Ein mit dem erfindungsgemäßen Verfahren hergestelltes Kunststoffteil weist somit eine Verbundplatte und eine daran angeformte Konturkulisse auf, wobei die Verbundplatte aus einem thermoplastischen Kunststoff mit darin eingebetteten Fasermatten ausgebildet ist, und die Konturkulisse aus thermoplastischem Kunststoff ausgebildet ist. Ein solches Kunststoffteil weist eine hohe Festigkeit bei geringem Gewicht auf und ist durch die Verwendung von thermoplastischem Kunststoff mit kurzen Zykluszeiten herstellbar, womit die Herstellungskosten gering gehalten werden.

Weitere vorteilhafte Ausgestaltungen der Erfindung gehen aus den Unteransprüchen hervor.

Die Erfindung wird nachfolgend beispielhaft anhand der Zeichnungen beschrieben. In den Zeichnungen zeigen:
- Fig. 1: schematisch einen Stapel von Kunststofffolien und Fasermatten, der zu einer Verbundplatte verpresst werden kann in einer Schnittdarstellung,
- Fig. 2: ein erfindungsgemäßes Kunststoffteil mit einer Verbundplatte und einer daran ausgebildeten Konturkulisse in einer Schnittdarstellung,
- Fig. 3 bis Fig. 7: schematisch eine erfindungsgemäße Vorrichtung in einer Schnittdarstellung in unterschiedlichen Stellungen.

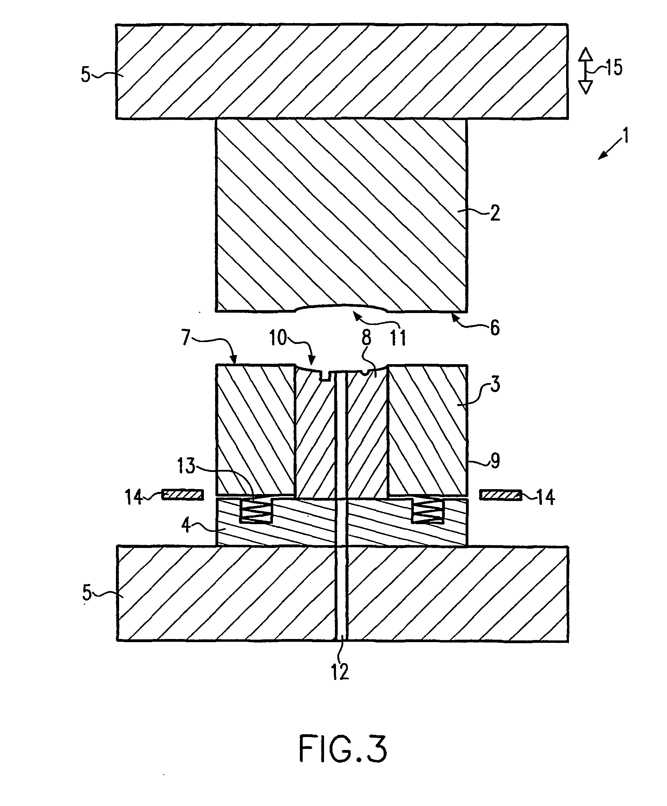

Das erfindungsgemäße Verfahren betrifft das Herstellen von faserverstärkten Kunststoffteilen aus Fasermatten und thermoplastischem Kunststoff. Dieses Verfahren kann beispielsweise mit einer Vorrichtung ausgeführt werden, wie sie in Fig. 3 schematisch in einer Schnittdarstellung gezeigt ist.

Dies ist eine Spritz-Präge-Vorrichtung 1, die eine Matrize 2 und einen Stempel 3 aufweist. Der Stempel 3 lagert auf einer Stempelbasisplatte 4. Die Matrize 2 und die Stempelbasisplatte 4 sind jeweils an Halteplatten 5 einer Pressvorrichtung derart befestigt, dass sich der Stempel 3 und die Matrize 2 jeweils mit Stirnflächen 6, 7 gegenüberliegend angeordnet sind.

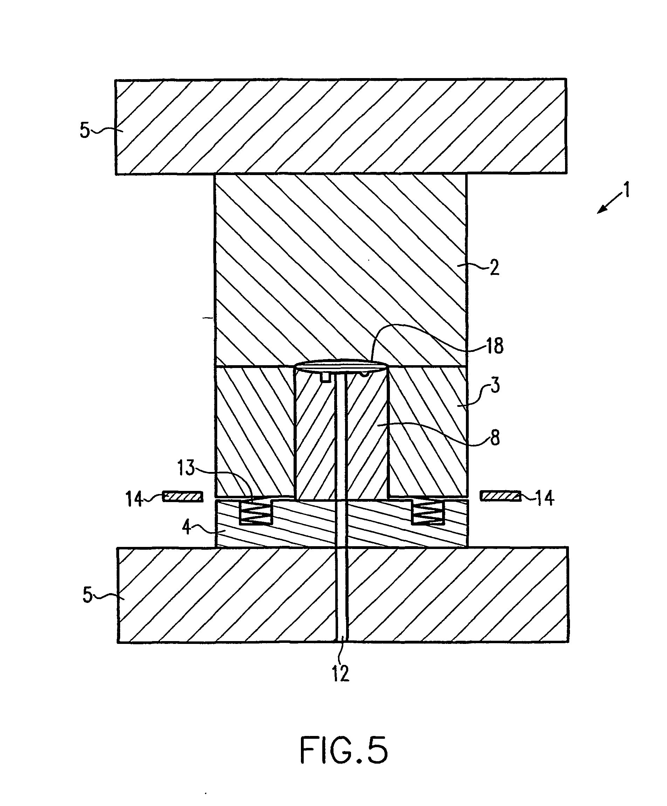

Der Stempel 3 ist zweiteilig aus einem Stempelkern 8 und einem Stempelmantel 9 ausgebildet. Der Stempelmantel 9 ist ein ringartiges Element, das den Stempelkern 8 in der Ansicht mit Blickrichtung auf die Stirnfläche 7 vollständig umschließt. Am Stempelkern 8 ist im Bereich der Stirnfläche 7 eine Formfläche 10 ausgebildet, die die komplementäre Form eines Bereiches des herzustellenden Kunststoffteiles aufweist. An der Stirnfläche 6 der Matrize 2 ist eine korrespondierende Formfläche 11 ausgebildet, die komplementär zur Form des übrigen Bereiches des zu fertigenden Kunststoffteiles ist. Im geschlossenen Zustand der Spritz-Präge-Vorrichtung 1 (Fig. 5, 6, 7) begrenzen die beiden Formflächen 10,11 eine im Wesentlichen geschlossene Spritzgießform. Von der Formfläche 10 des Stempels 3 erstreckt sich durch den Stempelkern 8, die Stempelbasisplatte 4 und der entsprechenden Halteplatte 5 ein Spritzgießkanal 12.

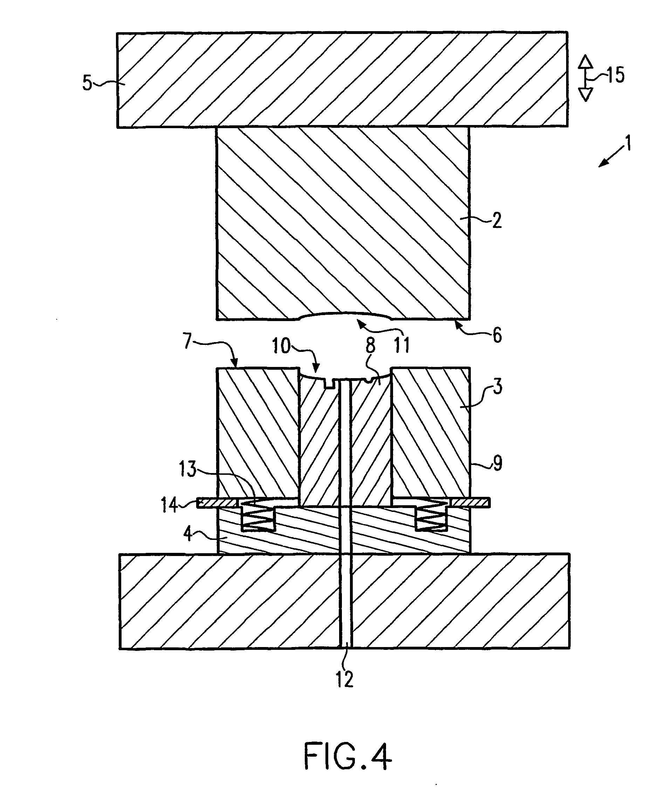

Zwischen dem Stempelmantel 9 und der Stempelbasisplatte 4 sind Federelemente 13 vorgesehen, die den Stempelmantel 9 in Richtung zur Matrize 2 mit einer Kraft beaufschlagen. In Fig. 3 sind der Stempelmantel 9 und der Stempelkern 8 derart angeordnet, dass deren Stirnflächen zueinander fluchten. Durch die Wirkung der Federelemente kann der Stempelmantel 9 aus dieser Position in Richtung zur Matrize 2 (Fig. 4) gedrückt werden. Der Stempelmantel 9 kann somit ein Stück am Stempelkern 8 vorstehen. Diese Position kann mittels Schieber 14 fixiert werden, die mittels einer Verstelleinrichtung (nicht dargestellt) zwischen die Stempelbasisplatte 4 und dem Stempelmantel 9 einschiebbar sind.

Die Halteplatte 5, an der die Matrize 2 befestigt ist, ist in Richtung zum Stempel 3 hin und her beweglich ausgebildet (Doppelpfeil 15), wobei ein erheblicher Druck auf ein in der Spritzgießform befindliches Material ausgeübt werden kann. Ein typischer Druckwert beträgt zum Beispiel 10⁵ N/cm².

Die Matrize 2 und der Stempel 3 sind mit Temperiereinrichtungen versehen, die eine Temperatureinstellung im Bereich von 20 °C bis 320°C erlauben. An den Spritzgieß-Kanal 12 ist eine an sich bekannte Extrudiereinrichtung angeschlossen, mit der vorgewärmtes thermoplastisches Material in den Kanal 12 extrudiert werden kann.

Nachfolgend wird das erfindungsgemäße Verfahren unter Einsatz der in den Figuren 3 bis 7 gezeigten Spritz-Präge-Vorrichtung erläutert.

Auf die Formfläche 10 wird zunächst ein Stapel von Fasermatten 16 und Kunststofffolien 17 aufgelegt. Dieser Stapel erstreckt sich über den Rand des Stempelkerns 8 in den Bereich des Stempelmantels 9. In diesem Stapel sind die Fasermatten 16 und Kunststofffolien 17 abwechselnd angeordnet, wobei die äußeren Lagen jeweils durch eine Kunststofffolie 17a bzw. 17b ausgebildet sind. Die Fasermatten 16 bestehen beispielsweise aus Carbonfasern und die Kunststofffolien 17 aus Polyamid, wie zum Beispiel PA6.

Die Matrize 2 und der Stempel 3 werden etwas über die Erweichungstemperatur der aus thermoplastischem Kunststoff bestehenden Kunststofffolien 17 erwärmt und die Matrize 2 wird gegen den Stempel 3 gepresst, so dass der Stapel von Fasermatten 16 und Kunststofffolien 17 zu einer Verbundplatte 18 verpresst wird. Bei diesem Pressvorgang dienen die mit einem Rand des Stempelkerns 8 vorstehenden Lagen von Fasermatten 16 und Kunststofffolien 17 als Dichtelemente, die vom Stempelmantel 9 und der Matrize 2 zusammengepresst werden. Hierdurch ist die durch die Formflächen 10, 11 begrenzte Spritzgießform gasdicht abgedichtet.

Da bei diesem Pressvorgang die aus thermoplastischem Kunststoffmaterial ausgebildeten Kunststofffolien 17 über ihre Erweichungstemperatur erwärmt werden, beginnt dieses Kunststoffmaterial zu fließen und dringt in die Poren der Fasermatten, so dass die einzelnen Fasern von thermoplastischem Kunststoff umschlossen sind.

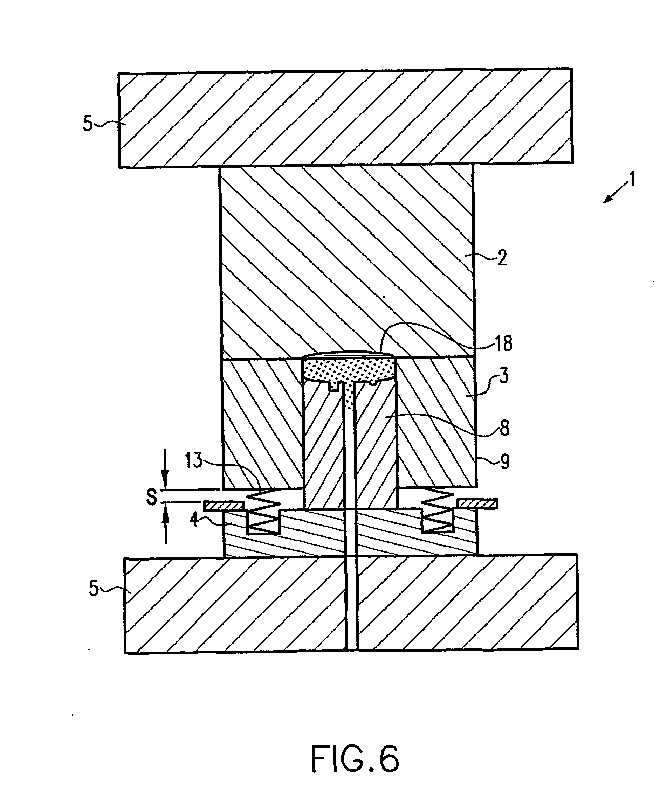

Nachdem in der Spritzgießform die Verbundplatte 18 ausgebildet ist, wird die Spritzgießform erweitert, indem die Matrize 2 ein Stück angehoben wird. Hierbei wird der Stempelmantel 9 durch die Federelemente 13 gegen die Matrize 2 gedrückt, so dass die Spritzgießform gasdicht abgedichtet ist. Ab einer gewissen Höhe werden die Schieber 14 zwischen dem Stempelmantel 9 und der Stempelbasisplatte 4 eingeschoben (Fig. 6). Zwischen dem Stempelmantel 9 und den Schiebern 14 besteht ein Spalt S, dessen Funktion unten näher erläutert wird.

In die erweiterte Spritzgießform wird durch den Spritzgieß-Kanal thermoplastischer Kunststoff zugeführt, der den restlichen Raum der Spritzgießform ausfüllt bildet. Der thermoplastische Kunststoff wird mit einem relativ geringen Druck zugeführt, damit die über die Erweichungstemperatur erwärmte Verbundplatte von der eindringenden Kunststoffmasse weder beschädigt noch verschoben wird. Dieser Druck beträgt etwa 20% bis 30% des üblichen Einspritzdruckes. Er wird vorzugsweise so gewählt, dass die Geschwindigkeit, mit welcher die thermoplastische Kunststoffmasse zugeführt wird, ca. 30 bis 90 mm/s beträgt. In der Regel liegt der beim erfindungsgemäßen Verfahren verwendete Druck zum Zuführen von thermoplastischen Kunststoff im Bereich zwischen 3·10⁷ Pa und 1,2·10⁸ Pa, wobei dieser Druck am Eingang des Spritzgießkanals 12 anliegt.

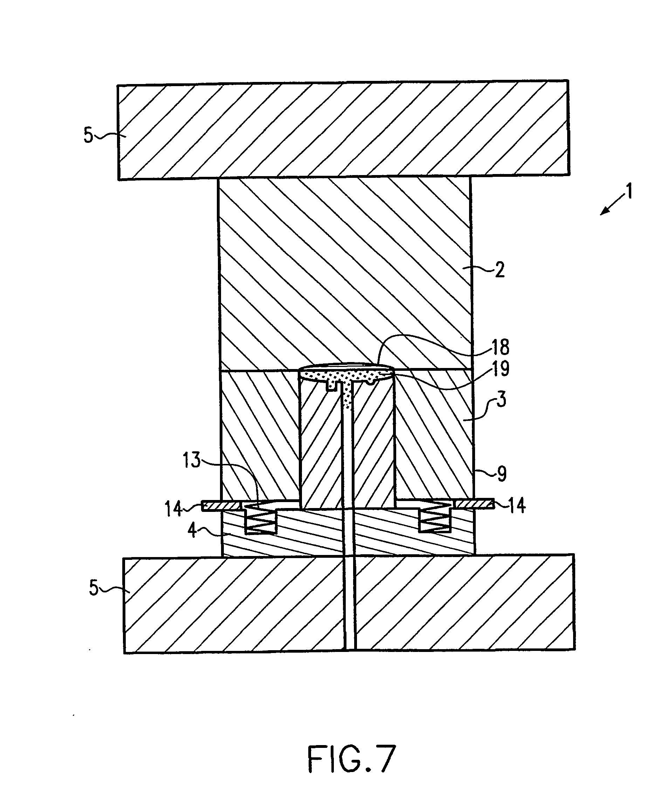

Nun wird mit der Pressvorrichtung der Druck auf die Matrize 2 erhöht, so dass die Matrize 2 nach unten bewegt wird, wobei der Stempelmantel 9 nach unten gegen die Schieber 14 gedrückt wird (Fig. 7). Hierdurch wird das Volumen der Spritzgießform verringert. Die Verringerung des Volumens beträgt ca. 10% bis 30% des maximalen Volumens. Dies führt zu einem sehr gleichmäßigen Druckaufbau in der Spritzgießform, wodurch der weiche thermoplastische Kunststoff geprägt und verdichtet wird und eine Konturkulisse 19 bildet. Durch die Verdichtung des Kunststoffes erhält dieser seine hohe mechanische Festigkeit. Überschüssiger Kunststoff wird beim Prägen aus der Spritzgießform verdrängt. Während des Prägevorganges wird mit der Pressvorrichtung der Druck in der Spritzgießform wesentlich erhöht. Er kann z.B. im Bereich von ca. 10⁷ Pa bis 4·10⁸ Pa liegen und ist vorzugsweise größer als 10⁸ Pa ist.

Die Konturkulisse 19 verbindet sich großflächig mit der Verbundplatte 18, da die äußere Lage der Verbundplatte 18, die mit der Konturkulisse 19 in Kontakt kommt, eine thermoplastische Kunststoffschicht ist, die über die Erweichungstemperatur erwärmt ist und somit sich mit dem thermoplastischen Kunststoff der Konturkulisse verbindet.

Die Spritzgießform wird unter die Erweichungstemperatur des thermoplastischen Kunststoffes abgekühlt, so dass das Kunststoffteil erstarrt und aus der Spritzgießform entformt werden kann. Hierzu sind im Stempelkern 8 an sich bekannte Auswerfstifte (nicht dargestellt) integriert, mit welchem nach Öffnen der Spritzgießform das Kunststoffteil vom Stempel 3 abgehoben werden kann.

Nach dem Entformen wird das Kunststoffteil beschnitten, wobei der Randbereich, der beim Spritzgießvorgang zwischen der Matrize 2 und dem Stempelmantel 9 eingeklemmt gewesen ist, abgeschnitten wird.

Die Zykluszeit, die mit dem Einlegen der Fasermatten und Kunststofffolien beginnt und mit dem Entformen des Kunststoffteils endet, dauert weniger als 3 min und kann bei einfachen kleinen Kunststoffteilen auf 1 min vermindert werden. Der Verfahrensschritt des Abkühlens unter die Erweichungstemperatur nimmt hierbei die meiste Zeit in Anspruch.

Mit dem erfindungsgemäßen Verfahren können faserverstärkte Kunststoffteile mit komplizierter Formgebung schnell und günstig hergestellt werden. Die Formgebung wird durch Formflächen 10 und 11 festgelegt. Die an der Matrize 2 ausgebildete Formfläche 11 kann glatt und gleichmäßig ausgebildet sein und somit eine Sichtfläche am fertigen Kunststoffteil ausbilden. Hierbei kann es zweckmäßig sein, dass die äußere Lage 17b der Verbundplatte 18, die beim Formen an der Formfläche 11 anliegt, aus einem speziellen, sicht vom übrigen thermoplastischen Kunststoff des Kunststoffteils unterscheidenden thermoplastischen Kunststoff ausgebildet ist, der zum Beispiel witterungsbeständig und UV-beständig ausgebildet ist oder eine bestimmte Einfärbung besitzt, damit das Kunststoffteil auf Dauer eine gewisse optische Erscheinung besitzt. Um dies zu erreichen, muss beim Einlegen der Fasermatten und Kunststofffolien die diese Lage bildende Kunststofffolie 17b aus dem entsprechenden thermoplastischen Kunststoffmaterial ausgebildet sein.

Bei dem erfindungsgemäßen Verfahren können Einlegeteile aus Metall oder anderen Kunststoffen, wie zum Beispiel Metallgewinde, Anschraubdorne, Dichtlippen oder dgl. mit eingegossen werden. Hierdurch wird ein multifunktionelles, hochfestes Kunststoffteil geschaffen. Die Form der Konturkulisse kann in den vom Spritzgießverfahren bekannten üblichen Formgebungen ausgestaltet sein.

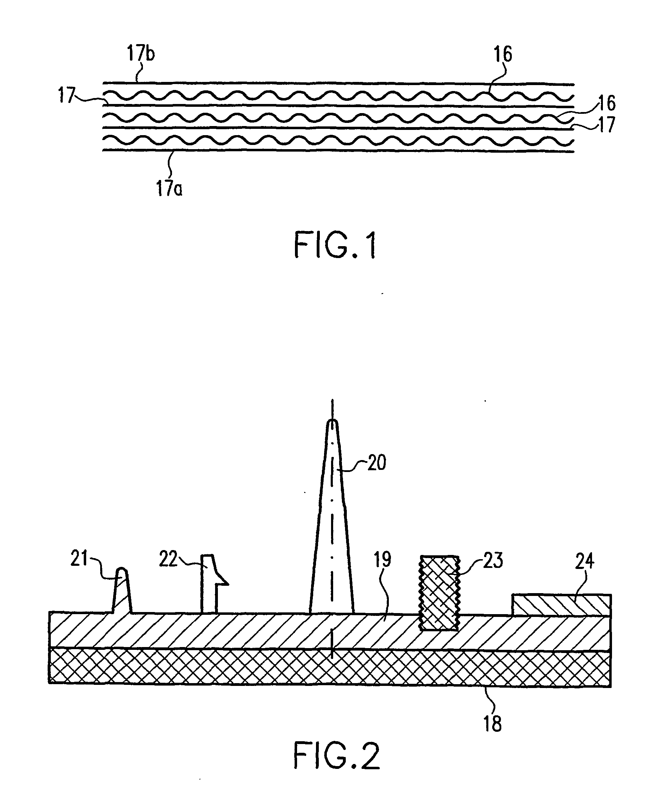

Fig. 2 zeigt ein erfindungsgemäßes faserverstärktes Kunststoffteil mit einer Verbundplatte 18 und der Konturkulisse 19. An der Konturkulisse 19 ist noch der Anguss 20, der durch die im Spritz-Gieß-Kanal erstarrende Masse gebildet wird, angeformt. An der Konturkulisse 19 ist eine Verstärkungsrippe 21 angeformt und ein Hakenelement 22, ein Gewindedorn 23 und eine Dichtlippe 24 sind darin eingegossen.

Mit dem oben beschriebenen Verfahren ist ein Kunststoffteil mit einer Verbundplatte der Größe 120 mm x 100 mm hergestellt worden, wobei als thermoplastischer Kunststoff Polyamid PA6 und als Fasermatten Carbonfasermatten verwendet worden sind. Das so erzeugte Kunststoffteil besitzt eine äußerst glatte Sichtfläche im Bereich der freien Oberfläche der Verbundplatte und ist bei geringem Gewicht hochfest. Die einzelnen Fasermatten sind vollständig mit thermoplastischen Kunststoffen durchsetzt und das gesamte Kunststoffteil bildet eine homogene Einheit. Bei der Herstellung dieses Kunststoffteiles betrug die Temperatur beim Pressen der Verbundplatte ca. 250 °C bis 290 °C, da die Erweichungstemperatur des hierbei verwendeten thermoplastischen Kunststoffes bei ca. 240 °C bis 245 °C liegt.

Im Rahmen der Erfindung ist es selbstverständlich möglich, auch andere thermoplastische Kunststoffe, wie zum Beispiel thermoplastischen Polyester, Polyethylen, Polypropylen oder Polybuten zu verwenden. Hierbei sind die einzelnen Verfahrensparameter, wie Temperatur, Druck und Zeit entsprechend anzupassen. Der während des Spritzgießvorgangs eingespritzte thermoplastische Kunststoff kann zur weiteren Erhöhung der Festigkeit Faseranteile beinhalten.

### Bezugszeichenliste:

- 1: Spritzpressvorrichtung
- 2: Matrize
- 3: Stempel
- 4: Stempelbasisplatte
- 5: Halteplatte
- 6: Stirnfläche
- 7: Stirnfläche
- 8: Stempelkern
- 9: Stempelmantel
- 10: Formfläche
- 11: Formfläche
- 12: Spritzgießkanal
- 13: Federelement
- 14: Schieber
- 15: Doppelpfeil
- 16: Fasermatte
- 17: Kunststofffolie
- 18: Verbundplatte
- 19: Konturkulisse
- 20: Anguss
- 21: Verstärkungsrippe
- 22: Hakenelement
- 23: Gewindedorn
- 24: Dichtlippe

## Patentansprüche

1. Verfahren zum Herstellen eines faserverstärkten Kunststoffteils, umfassend folgende Schritte:
- Anordnen einer Verbundplatt (18), die aus Fasermatten (16) und Lagen aus thermoplastischen Kunststoff (17) ausgebildet ist, in einer Spritzgießform (1), wobei die Verbundplatte (18) über die Erweichungstemperatur des thermoplastischen Kunststoffes erwärmt ist,
- Füllen der Spritzgießform (1) mit über die Erweichungstemperatur erwärmten thermoplastischen Kunststoff,
- Verringern des Volumens der Spritzgießform zum Verdichten des eingefüllten thermoplastischen Kunststoffes, so dass der eingefüllte thermoplastische Kunststoff zu einer Konturkulisse geprägt wird und sich mit der Verbundplatte verbindet, und
- Entformen des Kunststoffteils.

2. Verfahren nach Anspruch 1,
**dadurch gekennzeichnet,**
**dass** die Verbundplatte durch folgende Schritte in der Spritzgießform ausgebildet wird:
- Einlegen von Fasermatten und Kunststofffolien in die Spritzgießform, wobei die Kunststofffolien aus einem thermoplastischen Kunststoff ausgebildet sind
- Schließen der Spritzgießform und Erwärmen der Fasermatten und Kunststofffolien auf eine Temperatur etwas oberhalb der Erweichungstemperatur des thermoplastischen Kunststoffs,
- Pressen der Fasermatten und Kunststofffolien zu einer Verbundplatte.

3. Verfahren nach Anspruch 2,
**dadurch gekennzeichnet,**
**dass** das Pressen der Fasermatten und Kunststofffolien und das Spritzgießen in einer einzigen Spritzgießform ausgeführt werden.

4. Verfahren nach Anspruch 2 oder 3,
**dadurch gekennzeichnet,**
**dass** die Fasermatten und Kunststofffolien in die Spritzgießform derart eingelegt werden, dass sie einen Stapel bilden, in dem sich Fasermatten und Kunststofffolien abwechseln.

5. Verfahren nach Anspruch 4,
**dadurch gekennzeichnet,**
**dass** zumindest eine äußere Lage des Stapels eine Kunststofffolie ist.

6. Verfahren nach Anspruch 4,
**dadurch gekennzeichnet,**
**dass** beide äußeren Lagen des Stapels Kunststofffolien sind.

7. Verfahren nach Anspruch 5 oder 6,
**dadurch gekennzeichnet,**
**dass** der thermoplastische Kunststoff zum Ausbilden der Konturkulisse derart in die Spritzgießform eingespritzt wird, dass er großflächig an der Verbundplatte anliegt und sich mit einer aus thermoplastischem Kunststoff bestehenden äußeren Schicht der Verbundplatte verbindet.

8. Verfahren nach einem der Ansprüche 5 bis 7,
**dadurch gekennzeichnet,**
**dass** eine äußere Schicht der Verbundplatte, die nicht in Kontakt mit der Konturkulisse steht, aus einem witterungsbeständigen Kunststoffmaterial ausgebildet wird.

9. Verfahren nach einem der Ansprüche 1 bis 8,
**dadurch gekennzeichnet,**
**dass** beim Füllen der Spritzgießform ein thermoplastischer Kunststoff mit einem Fasergehalt verwendet wird.

10. Verfahren nach einem der Ansprüche 2 bis 9,
**dadurch gekennzeichnet,**
**dass** nach dem Pressen der Verbundplatte die Spritzgießform zur Ausbildung eines Hohlraumes aufgeweitet wird, wobei die Spritzgießform luftdicht verschlossen bleibt.

11. Verfahren zum Herstellen eines faserverstärkten Kunststoffteils nach einem der Anspruch 1 bis 10, wobei eine Vorrichtung benutzt wird mit
einer Spritzgießform, die durch eine Matrize (2) und einem Stempel (3) begrenzt ist, und der Stempel (3) zweiteilig aus einem Stempelkern (8) und einem Stempelmantel (9) ausgebildet ist, wobei der Stempelkern (8) an einer zur Matrize (2) weisenden Fläche eine die Spritzgießform begrenzende Formfläche (10) aufweist und angrenzend an dieser Formfläche (10) der Stempelkern (8) vom Stempelmantel (9) umschlossen ist, und der Stempelmantel (9) relativ zum Stempelkern (8) beweglich ist, und,
der Stempel (3) und die Matrize (2) in einer Pressvorrichtung derart angeordnet sind, dass der Stempel (3) und die Matrize (2) mit ihren die Spritzgießform begrenzenden Flächen (10, 11) aufeinander zu bewegbar sind.

12. Verfahren nach Anspruch 11,
**dadurch gekennzeichnet,**
**dass** eine Einrichtung (14) zum Fixieren des Stempelmantels (9) in einer Position vorgesehen ist, in der der Stempelmantel (9) in Richtung zur Matrize (2) ein Stück an der Formfläche (10) des Stempelkerns (8) vorsteht.

13. Verfahren nach Anspruch 12 oder 13,
**dadurch gekennzeichnet,**
**dass** der Stempelmantel (9) und der Stempelkern (8) an der Pressvorrichtung auf einer Stempelbasisplatte (4) gelagert sind, wobei zwischen dem Stempelmantel (9) und der Basisplatte (4) ein Federelement (13) angeordnet ist, mit welchem der Stempelmantel (9) in Richtung zur Matrize (2) beaufschlagt ist.

## Claims

1. Method for the production of a fibre-reinforced plastic component, comprising the following steps:
- the placing of a composite panel (18) made of fibre mats (16) and layers of thermoplastic (17) into an injection mould (1), in which the composite panel (18) is heated above the softening point of the thermoplastic,
- filling of the injection mould (1) with thermoplastic heated above the softening point,
- reduction of the volume of the injection mould to compress the poured-in thermoplastic, so that the poured-in thermoplastic is compressed to form a contoured gate and combines with the composite panel, and
- demoulding of the plastic component.

2. Method according to claim 1,
**characterised in that**
the composite panel is made in the injection mould by the following steps:
- placing of fibre mats and plastic sheets in the injection mould, with the plastic sheets being made of a thermoplastic material,
- closing of the injection mould and heating of the fibre mats and plastic sheets to a temperature somewhat above the softening point of the thermoplastic material,
- pressing of the fibre mats and plastic sheets to form a composite panel.

3. Method according to claim 2,
**characterised in that**
the pressing of the fibre mats and plastic sheets, and the injection moulding, are carried out in a single injection mould.

4. Method according to claim 2 or 3,
**characterised in that**
the fibre mats and plastic sheets are placed in the injection mould so as to form a stack in which fibre mats and plastic sheets alternate.

5. Method according to claim 4,
**characterised in that**
at least one outer layer of the stack is a plastic sheet.

6. Method according to claim 4,
**characterised in that**
both outer layers of the stack are plastic sheets.

7. Method according to claim 5 or 6,
**characterised in that**
the thermoplastic material for forming the contoured gate is injected into the injection mould in such a way that it is in contact with the composite panel over a large surface area and joins the composite panel with an outer layer made of thermoplastic.

8. Method according to any of claims 5 to 7
**characterised in that**
an outer layer of the composite panel, which is not in contact with the contoured gate, is made of a weather-resistant plastic material.

9. Method according to any of claims 1 to 8,
**characterised in that**
in filling the injection mould, a thermoplastic material with fibre content is used.

10. Method according to any of claims 2 to 9,
**characterised in that**
after pressing the composite panel, the injection mould is expanded to create a cavity, while at the same time the injection mould retains an air-tight seal.

11. Method of producing a fibre-reinforced plastic component according to any of claims 1 to 10, wherein an apparatus is used which has an injection mould bounded by a female die (2) and a punch (3), with the punch (3) being made in two parts, namely a punch core (8) and a punch jacket (9), wherein the punch core (8) has on a surface facing the female die (2) a forming area (10) bounding the injection mould, and adjacent to this forming area (10) the punch core (8) is encompassed by the punch jacket (9), and the punch jacket (9) may be moved relative to the punch core (8), and
the punch (3) and the female die (2) are so arranged in a press unit that the punch (3) and the female die (2) may be moved towards one another by their areas (10, 11) bounding the injection mould.

12. Method according to claim 11,
**characterised in that**
a device (14) is provided for fixing the punch jacket (9) in a position in which the punch jacket (9) projects slightly towards the female die (2) at the forming area (10) of the punch core (8).

13. Method according to claim 12 or 13,
**characterised in that**
the punch jacket (9) and the punch core (8) are mounted on the press unit on a punch baseplate (4), while between the punch jacket (9) and the baseplate (4) there is provided a spring element (13), which biases the punch jacket (9) towards the female die (2).

## Revendications

1. Procédé pour fabriquer une pièce en matière synthétique renforcée de fibres, comprenant les étapes suivantes :
- on agence dans un moule de coulée par injection (1) une plaque composite (18) réalisée de nappes de fibres (16) et de couches de matière synthétique thermoplastique (17), la plaque composite (18) étant chauffée au-delà de la température de ramollissement de la matière synthétique thermoplastique,
- on remplit le moule de coulée par injection (1) avec la matière synthétique thermoplastique chauffée au-delà de la température de ramollissement,
- on réduit le volume du moule de coulée par injection pour comprimer la matière synthétique thermoplastique remplie, de sorte que la matière synthétique thermoplastique remplie est estampée pour former un coulisseau contouré et se relie à la plaque composite, et
- on démoule la pièce en matière synthétique.

2. Procédé selon la revendication 1, **caractérisé en ce que** la plaque composite est réalisée dans le moule de coulée par injection par les étapes suivantes :
- on pose des nappes de fibres et des films en matière synthétique dans le moule de coulée par injection, les films en matière synthétique étant réalisés en une matière synthétique thermoplastique, et
- on referme le moule de coulée par injection et on fait chauffer les nappes de fibres et les films en matière synthétique à une température légèrement supérieure à la température de ramollissement de la matière synthétique thermoplastique,
- on presse les nappes de fibres et les films en matière synthétique pour former une plaque composite.

3. Procédé selon la revendication 2, **caractérisé en ce que** l'on exécute le pressage des nappes de fibres et des films en matière synthétique et la coulée par injection dans un moule de coulée par injection unique.

4. Procédé selon l'une ou l'autre des revendications 2 et 3, **caractérisé en ce que** l'on pose les nappes de fibres et les films en matière synthétique dans le moule de coulée par injection de telle sorte qu'ils forment un empilement dans lequel les nappes de fibres et les films en matière synthétique alternent.

5. Procédé selon la revendication 4, **caractérisé en ce qu'**au moins une couche extérieure de l'empilement est un film en matière synthétique.

6. Procédé selon la revendication 4, **caractérisé en ce que** les deux couches extérieures de l'empilement sont des films en matière synthétique.

7. Procédé selon l'une ou l'autre des revendications 5 et 6, **caractérisé en ce que** la matière synthétique thermoplastique pour réaliser le coulisseau contouré est injectée dans le moule de coulée par injection de telle sorte qu'elle s'applique à grande surface contre la plaque composite et qu'elle se relie à une couche extérieure de la plaque composite, qui est constituée en matière synthétique thermoplastique.

8. Procédé selon l'une des revendications 5 à 7, **caractérisé en ce que** l'on réalise une couche extérieure de la plaque composite, qui n'est pas en contact avec le coulisseau contouré, en une matière synthétique résistante aux intempéries.

9. Procédé selon l'une des revendications 1 à 8, **caractérisé en ce que** lors du remplissage du moule de coulée par injection, on utilise une matière synthétique thermoplastique avec une teneur en fibres.

10. Procédé selon l'une des revendications 2 à 9, **caractérisé en ce qu'**après le pressage de la plaque composite, on fait évaser le moule de coulée par injection pour réaliser une cavité, le moule de coulée par injection restant fermé de façon étanche à l'air.

11. Procédé pour fabriquer une pièce en matière synthétique renforcée de fibres selon l'une des revendications 1 à 10, en utilisant un appareil comportant un moule de coulée par injection qui est limité par une matrice (2) et par un poinçon (3), dans lequel le poinçon (3) est réalisé en deux pièces que sont un noyau de poinçon (8) et une enveloppe de poinçon (9), le noyau de poinçon (8) présente, sur une surface dirigée vers la matrice (2), une surface de moulage (10) délimitant le moule de coulée par injection et le noyau de poinçon (8) est entouré par l'enveloppe de poinçon (9) au voisinage de cette surface de moulage (10), l'enveloppe de poinçon (9) est mobile par rapport au noyau de poinçon (8), et le poinçon (3) et la matrice (2) sont agencés dans un dispositif de pressage de telle sorte que le poinçon (3) et la matrice (2) sont mobiles l'un vers l'autre par leurs surfaces (10, 11) délimitant le moule de coulée par injection.

12. Procédé selon la revendication 11, **caractérisé en ce qu'**il est prévu un organe (14) pour fixer l'enveloppe de poinçon (9) dans une position dans laquelle l'enveloppe de poinçon (9) dépasse en direction de la matrice (2) d'une petite distance au-delà de la surface de moulage (10) du noyau de poinçon (8).

13. Procédé selon l'une ou l'autre des revendications 11 et 12, **caractérisé en ce que** l'enveloppe de poinçon (9) et le noyau de poinçon (8) sont montés sur le dispositif de pressage sur une plaque de base de poinçon (4), un élément ressort (13) étant agencé entre l'enveloppe de poinçon (9) et la plaque de base (4), élément ressort par lequel l'enveloppe de poinçon (9) est sollicitée en direction de la matrice (2).
